Europäisches Patentamt

European Patent Office    (11) Publication number: **0 008 943**

Office européen des brevets    **B1**

(19)

(12)    **EUROPEAN PATENT SPECIFICATION**

(45) Date of publication of patent specification: **28.09.83**    (51) Int. Cl.³: **B 01 D 39/14,**
**B 01 D 46/00, C 03 C 25/00**

(21) Application number: **79301828.4**

(22) Date of filing: **05.09.79**

(54) **An improved absolute, fluid filter.**

(30) Priority: **06.09.78 US 939972**

(43) Date of publication of application:
**19.03.80 Bulletin 80/6**

(45) Publication of the grant of the patent:
**28.09.83 Bulletin 83/39**

(84) Designated Contracting States:
**BE CH DE FR GB IT NL SE**

(56) References cited:
**DE - B - 1 149 689**
**US - A - 3 053 762**
**US - A - 3 573 158**
**US - A - 4 011 067**
**US - A - 4 049 593**

(73) Proprietor: **Meny, Allan Henry**
**1 Hoover Street**
**North Arlington, New Jersey 07032 (US)**
Proprietor: **Palmer, Dennis Lucien**
**61 Douglas Drive**
**Towaco, New Jersey 07082 (US)**

(72) Inventor: **Meny, Allan Henry**
**1 Hoover Street**
**North Arlington, New Jersey 07032 (US)**
Inventor: **Palmer, Dennis Lucien**
**61 Douglas Drive**
**Towaco, New Jersey 07082 (US)**

(74) Representative: **Fisher, Bernard et al,**
**Raworth, Moss & Cook 36 Sydenham Road**
**Croydon Surrey CR0 2EF (GB)**

Courier Press, Leamington Spa, England.

# 0 008 943

## An improved absolute, fluid filter

This invention pertains to fluid filters for removing components such as particulate matter from gas streams, and in particular to an improved fluid filter of the absolute type.

Absolute filters, especially HEPA filters, are of uncommon efficiency for removing components such as particulate materials, particulate-aerosol combinants, sublimated solids, vapors, bacteria and virus, some real gases, and the like, from gas streams. However, filters of this type are uncommonly expensive and this fact, together with the impossibility of cleaning such filters for reuse, makes them economically unattractive. Such filters experience an overly efficient particulate impaction-retention, electrostatic attraction, and adhesion to the filter matrix that causes the filter to build up particulate matter, "blinding" the filter system, thus causing a severe gas stream pressure drop and loss of gas media through-put. If mechanical energy is added to the filter system to free the matrix of accumulated particulates, the energy has to be of such magnitude that it will lead to physical damage of the filter material or the structure of the filter matrix. In most cases, without damaging the filter, it cannot be rendered reusable.

It is an object of this invention to set forth an improved absolute, fluid filter which has been rendered easily and non-destructively cleanable and, hence, reusable.

It is particularly an object of this invention to set forth an improved absolute, fluid filter, for removing components such as particulate materials, particulate-aerosol combinants, sublimated solids, and the like, from gas streams, said filter having a matrix formed from a material taken from a group consisting of treated cellulose, glass, metal, and mineral fibers, fiber laminates, and synthetic polymer fibers which have been treated, filled or the like, wherein the improvement comprises means mated to said matrix material for facilitating release of said stream components from said filter, to render said filter easily and non-destructively cleanable, as aforesaid, whereby said filter, upon having been cleaned pursuant to a blinded condition thereof, manifests a change in pressure drop across the filter face which manifests restoration to fifty percent of the used or blinded condition pressure drop. For example, if the filter has a pressure drop of 3.8 cms (1.5 inches) of water at 28.3 cubic metres/min (1000 cfm) of air at STP across a filter with a face area of 3226 $cm^2$ (500 in.$^2$) and, with use, develops a pressure drop of 5 to 15 inches of water at the same condition and blinds, the filter should have to be cleaned to fifty percent of the blinded condition pressure drop, i.e. 6.35 or 19.05 cms (2.5 or 7.5 inches) of water, for the filter to be considered as having been rendered reusable. It is the aforesaid object of this invention, then, to disclose an improved absolute, fluid filter which can be rendered reusable.

It is another object of this invention to disclose an improved absolute, fluid filter, as aforesaid, wherein said mated means further comprises means for selectively altering physical properties of said matrix material to reduce impaction-retention of said stream components captured by said matrix material, while maintaining filtration efficiency of said filter, and rendering said filter easily and non-destructively cleanable and realizing said pressure condition thereacross as noted.

It is another object of this invention to teach an improved absolute, fluid filter, of the type noted, in which said mated means further comprises means for reducing electrostatic attraction of said matrix material for stream components captured by said matrix material.

It is another object of this invention to set forth an improved absolute, fluid filter, of the type noted, in which said mated means further comprises means for increasing diffusion capacity of said matrix material while maintaining in the latter accessible apertures or paths from where stream components captured by said matrix material can be easily removed without damage to the matrix system and, physically, to bring said filter to said fifty percent (approximately) pressure condition.

It is yet another object of this invention to disclose an improved absolute, fluid filter, according to the foregoing, in which said mated means further comprises means for protecting said matrix material from corrosive action of said stream components, or from damage arising from gross impingement, abrasion, or erosion.

It is still a further object of this invention to teach an improved absolute, fluid filter, as noted in the foregoing, in which said mated means further comprises means for rendering said stream components unreactive, non-carcinogenic, or likewise chemically stable, due to reaction of said components with said mated means, wherein said mated means comprises means for functioning as a gettering agent, and wherein said mated means comprises means for altering the chemical structure or chemical state, functionality or reactivity of the stream components.

Further objects of this invention, as well as the novel features thereof, will become more apparent by reference to the following description.

According to the present invention, there is provided an absolute, fluid filter for removing components such as particulate materials, particulate-aerosol combinations, sublimated solids and the like from gas streams, said filter having a matrix formed from polymeric fibres, characterised in that said fibres are coated with a material to harden strengthen and toughen the fibres and enhance the component release properties of the filter and render the filter cleanable and reusable, the coating material comprising a polymer and a fillter selected from graphite and graphite intercalates.

2

There is also provided an absolute, fluid filter for removing components such as particulate materials, particulate-aerosol combinations, sublimated solids and the like from gas streams, said filter having a matrix formed from polymeric fibres, characterised in that said fibres are formed of a compound of a polymer and a filter material selected to harden, strengthen and toughen the fibres and enhance the component release properties of the filter and render the filter cleanable and reusable, the filler material being selected from graphite, graphite intercalates and electrically conducting carbon black.

Fluid filters, especially absolute filters of the HEPA type, defined as superinterception apparatus, and so-called "absolute" because of their extremely high retention characteristics and their ability to remove the very smallest particles and the like from gas streams, manifest both impaction and diffusion. In impaction, the to-be-filtered-out components collide with filter matrix fibres and are held, particularly because the fibre surfaces are relatively light and soft, and they readily accept the components. In diffusion, the components in the gas stream migrate from a region of high component concentration to the regions of lower concentrations, and "diffuse" from the latter to the former to accumulate on the fibers. Now, this phenomena, taken with the electrostatic attraction of the fibers for the components, causes the components to cling tenaciously to the fibers. The impaction-retained components tend to be the larger thereof, whereas the diffused and electrostatically-held components are typically the smaller.

As noted previously, to effect release of the captured or entrapped components, it is the customary practice to add mechanical energy to the filter system. To release the components, a sufficient amount of energy must be added to overcome the combined impaction-retention/diffusion/electrostatic forces. Untreated filters must be energized with mechanical forces that will exceed the strength of the fibers of the matrix, or the fiber-agglomerates, and the filter itself, causing destruction of the filter system. This being the state-of-the-art condition for filter systems, it is our invention to coat, formulate constituents into, or impregnate the filter matrix material with one or more materials which impart singular component release, favorably alter the physical properties of the matrix material fibers, positively control the electrostatic forces of attraction for the gas stream components, and accommodate the egress of captured components by providing accessible apertures or paths from whence stream components can be easily removed. In addition, the coating materials, formulated constituents, or impregnants can simultaneously provide corrosion protection to the filter matrix material to render the gas stream components harmless, or simultaneously getter certain carcinogenics or chemically unstable substances by altering their chemical reactivity or by changing their chemical structure.

According to one embodiment of the invention, a coating material comprising a mixture of graphitic powders of varying particle-size distributions in various thermoplastic and thermoset plastics matrix systems is used. This material is available commercially, under the name Epis coating, from Epis Corporation, 70 Oakwood Drive, Glastonbury, Connecticut 06033. The coating is pressure sprayed onto one side of the filter media or matrix and drawn by vacuum on the side opposite. The coating is then allowed to reside in the filter matrix, with the spray turned off and with the vacuum on, for a period of time ranging from one to sixteen hours. The coating may be annealed or sintered after the aforesaid, fluidizing treatment. According to one of our curing techniques, the matrix is air dried with 121.1°C (250°F) air venting to the atmosphere, for from one to ten hours. Next, the heat is raised to 232.2°C (450°F), this being held for from one to sixteen hours. Finally, the filter matrix is allowed to cool to room temperature. The coating finishes as a homogeneous, hard film on the fibers of the filter matrix of from 10 to 1000 microns thickness, approximately.

The foregoing treatment reduces the resistivity of the filter matrix media from $10^{10}$ to $10^{13}$ ohm-cm (dry) to $10^{-4}$ to $10^{-1}$ ohm-cm depending on the composition of the coating and the thickness thereof. Coatings of this type, when formulated and applied as noted, also impart unusual corrosion resistance to the filter media because of the coating's ability to resist oxidation attack, organic-vapor solvent stress, corrosion cracking, caustic attack, inorganic gaseous attack, or solvation/dissolution attack from chlorinated hydrocarbons, or halogenated acids such as hydrofluoric acid (or hydrogen fluoride). Other coating compositions which may be used are set out in Tables 1 and 2 below, in which Table 1 lists plastics matrix coating systems and Table 2 gives fillers which may be used therein.

TABLE 1

| Coating solution solute | Composition of the coating prior to the coating application and cure (weight/percent) | Our formulation designation |
| --- | --- | --- |
| Polymethyl siloxane (silicone) | 0.5 to 85 in toluene cyclohexane, or chlorinated hydrocarbons or water-solvent emulsion or flame sprayed | PMS-1 |
| Polymethyl vinyl siloxane (silicone) | 0.5 to 85 in toluene, cyclohexane, or chlorinated hydrocarbons or water-solvent emulsion or flame sprayed | PVS-1 |
| Polyphenyl methyl siloxane (silicone) | 0.5 to 85 (in same, as above) | PPMS-1 |
| Polytetrafluoroethylene | 0.5 to 50 in a water emulsion or applied in a fluidized bed or electrostatic process as neat material or flame sprayed | TFE-1 |
| Polymethylmethacrylate (acrylic) | 0.5 to 85 in ketones, alcohols, freons, glycol ethers (cellusolves, etc.) or chlorinated hydrocarbons (CH)* or as a water emulsion | PMMA-1 |
| Polyacrylic acid (acryiic acid) | 0.5 to 85 in Tetrahydrofuran (THF), N,N-dimethyl formamide (NNDF) or as a water solution | PAA-1 |
| Acrylonitrilebutadiene polystyrene (ABS) | 0.5 to 85 in ketones, cyclohexane, NNDF, THF or as a water-solvent emulsion | ABS-1 |
| Alkyd polymers (alkyd) | 0.5 to 85 in ketones, THF 1,1,1,3,3,3-hexafluoro-2-propanol (HFP) or as a water-solvent emulsion | AP-1 |
| Polyamides (nylons, nylon 11, nylon 6/6 nylon 6/10, nylon 6, nylon 12) | 0.5 to 85 in NNDF, HFP, THF, toluenes or as a water-solvent emulsion or flame sprayed or fluidized bed or electro-statically coated | PA-1 |
| Polyamides (vespels) | 0.5 to 85 in NNDF, HFP, THF, toluenes or as a water-solvent emulsion or flame sprayed or fluidized bed or electro-statically coated | PI-1 |
| Cellulosics (cellulose nitrate, acetate butyrate, ethyl cellulose modified with urea, alkyd and other resins) | 0.5 to 85 in ketones, esters, aromatic solvents, THF, NNDF, electrostatic powder techniques | C-1 |
| Epoxy polymers (glycidyl ethers of bishydroxylphenyl propane catalyzed with mono-, di-, or trifunctional amines or phenolic or amino resins) | 0.5 to 85 in THF, chlori-nated hydrocarbons electro-static or flame sprayed or fluidized bed | EP-1 |

# 0 008 943

TABLE 1 (contd.)

| Coating solution solute | Composition of the coating prior to the coating application and cure (weight/percent) | Our formulation designation |
|---|---|---|
| Polyfluoroethylene propylene (FEP resins) | 0.5 to 85 in a water emulsion, or as a neat solid by high temperature sintering | FEP-1 |
| Unsaturated polyester (linear alkyd having carbon to carbon unsaturation) | 0.5 to 85 in ketones, toluene, THF, chlorinated hydrocarbons or as a water solvent emulsion | UE-1 |
| Polyphenylene sulfide (Ryton) (Registered Trade Mark of Phillips Petroleum Co.) | Fluidized bed or electrostatic spray or flame sprayed | PPS-1 |
| Polyolefins (polyethylene, polypropylene) | Flame spraying or fusion sintering or as a water suspension emulsion | POE-1 POP-1 |
| Chlorosulfonated polyethylene (Hypalon) (Registered Trade Mark of Dupont Chemical Company) | 0.5 to 85 in a water solvent emulsion system | CSPE-1 |
| Polyphenylene oxides (Valox) (Registered Trade Mark of General Electric Company) | 0.5 to 85 in NNDF or as a water solvent emulsion or flame sprayed or electro-statically coated or fluidized bed | PPO-1 |
| Polycarbonates (Lexan) (Registered Trade Mark of General Electric Company) | 0.5 to 85 in THF, chlori-nated hydrocarbons or as a water solvent emulsion | PC-1 |
| Polysulfones | 0.5 to 85 in THF or chlorinated hydrocarbons or flame sprayed or fluidized bed application | PS-1 |
| Polyurethanes (polyether and polyester types) | 0.5 to 85 in methylene chloride, THF, glycol ethers toluene, 100% solids spray or a water solvent emulsion | PUES-1 PUET-1 |
| Polyparaxylene | Vapor deposited | PPX-1 |

*See Table 3 for chemical names of solvents shown as abbreviations.

TABLE 2

Range of compositions

| Filler* | Composition (weight/percent) | Binder** (weight/percent) | Vehicle (weight/percent) |
|---|---|---|---|
| Silver plated on carbon | 0.1 to 25 | 0.3 to 10.0 | 99.6 to 65.0 |
| Silver plate on graphite | 0.1 to 25 | 0.3 to 10.0 | 99.6 to 65.0 |
| Iridium plated on graphite | 0.1 to 25 | 0.3 to 10.0 | 99.6 to 65.0 |
| General purpose industrial grade graphite | 0.1 to 25 | 0.3 to 10.0 | 99.6 to 65.0 |
| Premium grade industrial grade graphite | 0.1 to 25 | 0.3 to 10.0 | 99.6 to 65.0 |

5

TABLE 2 (continued)

| Filler* | Range of compositions | | |
|---|---|---|---|
| | Composition (weight/percent) | Binder** (weight/percent) | Vehicle (weight/percent) |
| Carbon-graphite alloys | 0.1 to 25 | 0.3 to 10.0 | 99.6 to 65.0 |
| Recrystallized graphite | 0.1 to 25 | 0.3 to 10.0 | 99.6 to 65.0 |
| Pyrolytic graphite | 0.1 to 25 | 0.3 to 10.0 | 99.6 to 65.0 |
| Highly ordered pyrolytic graphite | 0.1 to 25 | 0.3 to 10.0 | 99.6 to 65.0 |
| Ceylon natural graphite | 0.1 to 25 | 0.3 to 10.0 | 99.6 to 65.0 |
| Madagascar natural graphite | 0.1 to 25 | 0.3 to 10.0 | 99.6 to 65.0 |
| Polyfluorinated graphite intercalcates | 0.1 to 25 | 0.3 to 10.0 | 99.6 to 65.0 |
| $WF_6$ or $MoFe_6$ graphite intercalates [$C(11\pm1)$ n $MoF_6$ and $(C(14\pm1)n$ $WF_6$] | 0.1 to 25 | 0.3 to 10.0 | 99.6 to 65.0 |
| Graphite intercalates of nitric acid [$C_{16}$ $HNO_3$, $C_{15}$ $HNO_3$, $C_{24}/C_{25}$ $HNO_3$ or $C_{(8+2x)n}$ $N_2O_5 . xH_2O$] | 0.1 to 25 | 0.3 to 10.0 | 99.6 to 65.0 |
| Graphite intercalates of trifluoromethane-sulfonic acid [$C_{26}+CF_3SO_3-$ . 1 . $63CF_3SO_3H$] | 0.1 to 25 | 0.3 to 10.0 | 99.6 to 65.0 |
| Graphite intercalates of sulfuric acid [$C_{24}+HSO_4- . XH_2SO_4$ where x=2.37 to 2.63] | 0.1 to 25 | 0.3 to 10.0 | 99.6 to 65.0 |
| Graphite intercalates of metal chlorides [e.g. $CNFECl_{(3-x)}$, $C_{26}FeCl_3$, $C_{24}FeCl_2$, where metal chlorides can be $MoCl_5$, $MnCl_2$, $FeCl_3$, $FeCl_2$, $CoCl_2$, $NiCl_2$, $CuCl_2$] | 0.1 to 25 | 0.3 to 10.0 | 99.6 to 65.0 |
| Graphite intercalates of alkali metals and metal chloride solvent complexes [$Li_3CmFeCl_3$ (tetrahydrofuran)$_3$] | 0.1 to 25 | 0.3 to 10.0 | 99.6 to 65.0 |
| Graphite intercalates of mixed metal chlorides and bromides [$C_{13.2}TlCl_{1.8}Br_{1.7}$, $C_{30}TlBr_{3.4}$] | | | |
| Graphite intercalates of metal bromides [$C_{25.3}TlBr_{3.2} . Br_2-$ $TlBr_3$, where other metal bromides may be $CdBr_2$, $HgBr_2AlBr_3$ and $GaBr_3$] | 0.1 to 25 | 0.3 to 10.0 | 99.6 to 65.0 |

TABLE 2 (continued)
Range of compositions

| Filler* | Composition (weight/ percent) | Binder** (weight/ percent) | Vehicle (weight/ percent) |
|---|---|---|---|
| Graphite intercalates of alkali metals and benzene [MC$_{24}$(C$_6$H$_6$)x or KC$_{24}$(C$_6$H$_6$)x] | 0.1 to 25 | 0.3 to 10.0 | 99.6 to 65.0 |
| Simple graphite intercalates of alkali metals [LiC$_6$, KC$_8$, RbC$_8$, etc. or KC$_{24}$, LiC$_{12}$, KC$_{36}$] | 0.1 to 25 | 0.3 to 10.0 | 99.6 to 65.0 |
| Graphite intercalates of boron trifluoride [Cn—OC$_2$H$_5$ . xBF$_3$] | 0.1 to 25 | 0.3 to 10.0 | 99.6 to 65.0 |
| Graphite antimony pentafluoride inter- calate [Cx . SbF$_5$] | 0.1 to 25 | 0.3 to 10.0 | 99.6 to 65.0 |
| Layer intercalated dicholcoginides [L1TiS$_2$, TaCs(NH$_3$)] | 0.1 to 25 | 0.3 to 10.0 | 99.6 to 65.0 |
| MoS intercalation compounds [AxMoS$_2$ where A=Na, K, Rb, Cs, Ca and Sr] | 0.1 to 25 | 0.3 to 10.0 | 99.6 to 65.0 |
| Metal oxide lamellar intercalation compounds [AxMo$_2$ where A=Na, K, etc. and M=Cr, Mn, Co] | 0.1 to 25 | 0.3 to 10.0 | 99.6 to 65.0 |

*600 mesh or smaller particle size
**based on solids content

Since most coatings must be processed onto or into the filter media, a vehicle, such as a solvent, must be used to allow the coating to form a homogeneous film or to penetrate the filter media fibers. Table 3 lists preferred vehicles.

TABLE 3

H$_2$O
H$_2$O/NaOH, Ca(OH)$_2$, KOH
N$_2$H$_4$/H$_2$O
Isopropanol (IPA)
Isopropanol and water (IPA+H$_2$O)
Tetrahydrofuran (THF)
N,N'-dimethyl formamide (NNDF)
Acetone (ACE)
Methyl ethyl ketone (MEK)
Freon solvents (FR)
Carbitol ⎤
Cellosolve ⎬ polyglycol ethers
Propasol ⎦
Methyl isobutyl ketone (MIBK)
Methylene chloride (MC)
2,2,2-Trifluoroethanol (2-TFE)
1,1,1,3,3,3-Hexafluoro-2-propanol (1-3-HFP)
Cyclohexane (CH)
H$_2$O+amonic and/or cationic surfactants (HS)
Toluene (Tol)
Bezene (Ben)
Methanol (M)
Ethanol (E)

## 0 008 943

Accordingly, a typical coating formulation containing a "binder" (from Table 1), a vehicle (i.e. Table 3), and a filler agent (from Table 2) may be applied to, or impregnated into matrix fibers, to impart the inventive properties thereto, and yield the improved filter, and such typical formulations are set out in Table 4.

TABLE 4

| Formulation number | Filler[i] | | | Binder[ii] | | Vehicle[iii] | | Surfactants | |
|---|---|---|---|---|---|---|---|---|---|
| | Type | W/O | | Type | W/O | Type | W/O | Type | W/O |
| 1 | Graphite*** | 6.0 | | PMMA-1 | 6.8 | MC | 94.0 | — | — |
| 2 | Silver on graphite** | 25 | | EP-1 | 10.0 | THF | 75 | — | — |
| 3 | Polyfluorinated graphite intercalate*** | 20 | | TFE | 80 | (none) | | (flame sprays after cold blending with sintering at 500°F) | |
| 4 | $KC_{24}(C_6H_6)_x$ | | | TFE and graphite | 35 | Freon-111 | 65 | — | — |
| 5 | $Cx \cdot SbF_5$ | | | TFE and graphite | 10 | Freon-111 | 90 | — | — |
| 6 | $Li_3CnFeCl_3$ (tetramethylene oxide) | | | TFE and graphite | 30 | THF | 70 | — | — |
| 7 | $C_{13.2}TlCl_{1.8}Br_{1.7}$ | | | TFE and graphite | 25 | Freon-111 | 75 | — | — |

*Based on solids content after vehicle evaporation.

**600 mesh or less, dried.

***Northern Michigan or Canadian graphite highly ordered or pyrolytic graphite—1000 mesh or less.

[i]See Table 2.

[ii]See Table 1.

[iii]See Table 3 (the term "vehicle" is the terminology for a solvent or solvent mixture that allows film formation in a coating by evaporative loss cross-linking, or emulsion formation).

[iv]Trade mark of the General Electric Company for its polyalkalene glycol siloxane.

Formulation numbers 3 through 7, as well as graphite intercalates or boron trifluoride act as gettering agents (e.g. polymerization of polyvinyl chloride monomer to a polymerized state to remove the monomer from a process gas stream).

The medium of the filter matrix to be coated can be made from polymeric materials, and polymer composites, as described previously.

In another embodiment, the matrix is prepared from a filter media material comprising a compound of polyethylene and ketjenblack-EC ( the trademark for an electrical conductive carbon black manufactured by Noury Chemical Company, New York). Typically, the constituent elements are cold blended and extruded into fibers, or formed by explosive reticulation techniques. The extruded or otherwise formed fibers are then woven, compressed or hand layed-up into a desired filter configuration. Simply by adjusting the amount of fiber "filler", i.e. the Ketjenblack-EC, it is possible to alter the component (i.e. to-be-filtered-out particles, etc.)-to-media adhesion. That is, differences in the net component (particle)-media volume resistivity, and the net overall volume resistivity of the media surface and/or the fibers, to determine the amount of energy which will be required to break or neutralize the forces of attraction between the components (particles) and media, can be effected by the filler content. Ketjenblack-EC is but one filler which may be used for this purpose, and is mentioned, here, only for exemplary purposes. Other suitable fillers are listed in Table 2.

As noted priorly, various polymeric materials may be used as filter media fibers or material. Table 5 lists polymeric materials that may act as filter media by matrices for which other and various filters are added to alter the properties of the media.

TABLE 5

| Generic name | Common name |
| --- | --- |
| Polymethyl siloxane | Silicone |
| Polymethyl vinyl siloxane | Silicone |
| Polyphenyl methyl siloxane | Silicone |
| Polytetrafluoroethylene | Teflon (tn, DuPont), TFE |
| Polymethylmethacrylate | Lucite (tm, DuPont) acrylic |
| Polyacrylic acids | — |
| Acrylonitrile-butadiene polystyrene | ABS |
| Alkyd polymers | Alkyds |
| Polyamides | Nylon 6, 6/6, 11, 12, 6/10 |
| Polyimides | Vespel (tm, DuPont) |
| Polyamide-imides | Torlon (tm, Amoco Chemical) |
| Cellulosics | Cellulose nitrate— acetate butyrate, ethyl cellulose modified with urea, alkyd, and other resins |
| Epoxy polymers | Glycidyl ethers of bis- hydroxy phenyl propane catalyzed with mono-, di-, or trifunctional amines or phenolic or amino resins |
| Polyfluoroethylene propylene | FEP resins (DuPont) |
| Unsaturated polyester polymers | Linear alkyd having carbon to carbon unsaturation |
| Polyphenylene sulfide | Ryton (Phillips Petroleum) |
| Polyolefins | Polyethylene, polypropylene, etc. |
| Chlorosulfonated polyethylene | Hypalon (DuPont) |
| Polyphenylene oxide polymers | Valox (G.E.) |
| Polycarbonate polymers | Lexan (G.E.) |
| Polysulfones | — |
| Polyarylsulfones | — |
| Polyurethane | Polyester or polyether types mono-methyl—or trimethyl diisocegente |
| Polyparaxylene | Paralin |

In this embodiment, these polymeric materials contain filler agents which will modify their physical properties in such a fashion as to control gas stream component impaction-retention, modify surface specific resistivity, and provide a relatively easy means for component release from the filter

# 0 008 943

matrix with the introduction of mechanical, or other, energy forms. Filler agents for the listed polymeric materials, and concentration ranges therefor, are listed in Table 6.

TABLE 6

| Filler** | Filler (phr)* | Binder or matrix (phr) |
|---|---|---|
| Silver plated carbon (1 to 13 w/o silver on carbon) | 1.0 to 350 | 100 |
| Silver plated graphite (1 to 16 w/o silver on graphite; see Table 2 for types of graphite) | 1.0 to 350 | 100 |
| Iridium plated graphite (0.5 to 6 w/o silver on graphite; see Table 2 for types of graphite) | 1.0 to 350 | 100 |
| Noury ketjenblack-EC(tm) | 1.0 to 350 | 100 |
| General purpose industrial grade graphite | 1.0 to 350 | 100 |
| Carbon-graphite alloys | 1.0 to 350 | 100 |
| Premium grade industrial grade graphite | 1.0 to 350 | 100 |
| Recrystallized graphite | 1.0 to 350 | 100 |
| Pyrolytic graphite | 1.0 to 350 | 100 |
| Highly ordered pyrolytic graphite (HOPG) | 1.0 to 350 | 100 |
| Ceylon natural graphite | 1.0 to 350 | 100 |
| Madagascar natural graphite | 1.0 to 350 | 100 |
| Polyfluorinated graphite intercalates | 1.0 to 350 | 100 |
| $C(1.1\pm1)_nMoF_6$ or $C(14\pm1)_nWF_6$, graphite intercalates | 1.0 to 350 | 100 |
| Graphite intercalates of nitric acid (see Table 2) | 1.0 to 350 | 100 |
| Graphite intercalates of trifluoro-methanesulfonic acid (see Table 2) | 1.0 to 350 | 100 |
| Graphite intercalates of sulfuric acid (see Table 2) | 1.0 to 350 | 100 |
| Graphite intercalates of metal chlorides (see Table 2) | 1.0 to 350 | 100 |
| Graphite intercalates of alkali metals and metal chloride solvent complexes (see Table 2) | 1.0 to 350 | 100 |
| Graphite intercalates of mixed metal chlorides and bromides (see Table 2) | 1.0 to 350 | 100 |
| Graphite intercalates of metal bromides (see Table 2) | 1.0 to 350 | 100 |
| Graphite intercalates of alkali metals and benzene (see Table 2) | 1.0 to 350 | 100 |
| Simple graphite intercalates of alkali metals (see Table 2) | 1.0 to 350 | 100 |
| Graphite intercalates of boron trifluoride (see Table 2) | 1.0 to 350 | 100 |
| Graphite-antimony penta-fluoride intercalates (see Table 2) | 1.0 to 350 | 100 |

*phr: parts per hundred resin or polymer binder.
**See Table 2.

While we have described our invention in connection with specific embodiments thereof, it is to be clearly understood that this is done only by way of example and not as a limitation to the scope of the invention as set forth in the objects thereof and in the appended claims.

The invention teaches an improvement of existing components known as HEPA filters, in which the latter is defined as a particular filter system with tested particulate removal of 99.97% of all particles down to 0.3 microns, and where the filtration mechanism is any one or combination of the

11

following: entrainment by impaction retention, impingement, and/or electrostatic attraction. It is a known engineering, and industrial, practical fact that HEPA filters, i.e. absolute filters, will eventually become blinded or inoperative, where blinding is defined as a pressure drop of 12.7 to 38.1 cms (5 to 15 inches) of water with an air flow of 28.3 cubic metres/min (1000 cfm) over a HEPA face area of 3226 cm$^2$ (500 in.$^2$). With a pressure drop from initial unrestricted flow, the filter will block an air stream, cause abnormal resistance and, if the air pressure is maintained, the filter media will rupture. At this point, no means can be used to reclaim the filter because of irreversible damage having occurred to the filter media. The invention discloses an improved HEPA or absolute filter which is rendered reusable, after blinding thereof, by the coating of the filter media with a series of specific coating formulations or by fabricating an absolute filter from a specific series of formulated materials in various configurations, variations, and compositions so as to permit the absolute filter to be cleaned or reused at an improved pressure condition of no less than 50% of its final, used pressure drop (e.g. initial pressure drop of 5.08 cms (2 inches) of water; used pressure drop of 30.5 cms (12 inches) of water; cleaned pressure drop of 5.08 to 15.24 cms 2 to 6 inches of water). The herein disclosed improved absolute filter is so constructed that, by adding energy thereto in the form of mechanical impaction, ultrasonic or mechanical vibration, reverse air flow at pressures of 0.1 to 5 atmospheres, or vacuums from either the inlet or outlet sides of the filter at 0.5 atmospheres to 1 times 10$^{-6}$ torr, the attactive force of the entrained particle will be neutralized and the particle will be released from the filter media.

In order to accomplish this, the filter media of the absolute filter must be chamically and physically modified to create a balance between the energy of the entrained particle and the filter media. If this is not done, the "added energy" of the cleaning processes noted above will cause the particle to release so as to damage the filter media, since excess energy will cause media rupture. An improved absolute filter, according to the disclosed invention, is formed by coating of the media with the formulations listed in Table 1 and Table 2, where the selected vehicles for the coatings are listed in Table 3. Some preferred formulations are found in Table 4.

What is especially to be noted is this, that the coating(s) alter the original or base filter media by strengthening, and this established by an increase thereof in tensile strength, or percent of elongation, or abrasion resistance, or tear strength.

In summary the novel, improved absolute filter comprises a coating which comprises a polymeric binder with its appropriate solvent vehicle, and filters and extenders which are added to the polymeric binder. These coatings add strength and toughness to the filter media, after the volume resistivity of the media by making it more electrically conductive or protects the media from corrosive attack.

The teaching of this invention comprises the formation of the filter media from fibers, mattes, agglomerates, fiber overlays, woven fibers, entangled masses, reticulated structures, porous sinters or frits, at no greater than seventy percent theoretical density, which have been specially formulated with additives to cause the filter media to perform like the coated fibers priorly discussed and described.

**Claims**

1. An absolute, fluid filter for removing components such as particulate materials, particulate-aerosol combinations, sublimated solids and the like from gas streams, said filter having a matrix formed from polymeric fibres, characterised in that said fibres are coated with a material to harden strengthen and toughen the fibres and enhance the component release properties of the filter and render the filter cleanable and reusable, the coating material comprising a polymer and a filler selected from graphite and graphite intercalates.

2. An absolute fluid filter according to claim 1, characterised in that the coating material comprises graphitic powder and the coating provides the filter matrix with a resistivity from 10$^{-4}$ to 10$^{-1}$ ohm-cm.

3. An absolute, fluid filter for removing components such as particulate materials, particulate-aerosol combinations, sublimated solids and the like from gas streams, said filter having a matrix formed from polymeric fibres, characterised in that said fibres are formed of a compound of a polymer and a filler material selected to harden strengthen and toughen the fibres and enhance the component release properties of the filter and render the filter cleanable and reusable, the filler material being selected from graphite, graphite intercalates and electrically conducting carbon black.

4. An absolute fluid filter according to claim 3, characterised in that said fibres are formed of a compound of carbon black and polyethylene.

5. An absolute fluid filter according to any preceding claim, characterised in that the filler comprises means for gettering carcinogenic and like harmful vapours and/or particulates borne by said gas streams by altering said carcinogenic and like vapours and/or particulates chemical reactivity or changing the chemical structure thereof.

6. An absolute fluid filter according to claim 5, characterised in that filler comprises a graphite intercalate defining said gettering means.

**Patentansprüche**

1. Absolutes Fluid-Filter zum Entfernen von Komponenten wie Feststoffpartikel-Materialien, Feststoffpartikel-Aerosol-Kombinationen, sublimierte Feststoffe u.dgl. aus Gasströmen, wobei das Filter eine aus Polymer-Fasern gebildete Matrix aufweist, dadurch gekennzeichnet, daß die Fasern mit einem Material beschichtet sind, um die Fasern zu härten, zu viersteifen und zäh zu machen und die Komponenten-Freigabe-Eigenschaften des Filters zu verbessern und das Filter reinigbar und wider verwendbar zu machin, wobei das Beschichtungsmaterial ein Polymer und ein Füllmaterial aufweist, das aus Graphit und Graphiteinlagerungsmaterial ausgewählt ist.

2. Absolutes Fluid-Filter nach Anspruch 1, dadurch gekennzeichnet, daß das Beschichtungsmaterial Graphitpulver aufweist und die Beschichtung die Filtermatrix mit einem spezifischen Widerstand von $10^{-4}$ bis $10^{-1}$ Ohm cm versieht.

3. Absolutes Fluid-Filter zum Entfernen von Komponenten wie Feststoffpartikel-Materialien, Feststoffpartikel-Aerosol-Kombinationen, sublimierte Feststoffe u.dgl. aus Gasströmen, wobei das Filter eine aus Polymer-Fasern gebildete Matrix aufweist, dadurch gekennzeichnet, daß die Fasern aus einer Zusammensetzung eines Polymers und eines Füllmaterials gebildet sind, die derart ausgewählt ist, daß sie die Fasern härtet, versteift und zäh macht und die Komponenten-Freigabe-Eigenschaften des Filters verbessert und das Filter reinigbar und wieder verwendbar macht, wobei das Füllmaterial aus Graphit, Graphiteinlagerungsmaterial und elektrisch leitendem Ruß ausgewählt ist.

4. Absolutes Fluid-Filter nach Anspruch 3, dadurch gekennzeichnet, daß die Fasern aus einer Zusammensetzung von Ruß und Polyäthylen gebildet sind.

5. Absolutes Fluid-Filter nach irgendeinem vorhergehenden Anspruch, dadurch gekennzeichnet, daß das Füllmaterial Mittel zum Gettern von von den Gasströmen getragenen karzinogenen und ähnlichen gefährlichen Dämpfen und/oder Feststoffpartikeln durch Andern der chemischen Reaktionsfähigkeit der karzinogenen und ähnlichen Dämpfe und/oder Feststoffpartikel oder durch Andern von deren chemischer Struktur aufweist.

6. Absolutes Fluid-Filter nach Anspruch 5, dadurch gekennzeichnet, daß das Füllmaterial eine die Getter-Mittel bildende Graphiteinlagerung aufweist.

**Revendications**

1. Filtre absolu de fluides pour éliminer, de courants de gaz, des composants tels que des particules de matière, des particules et aérosols combinés, des solides sublimés et des produits similaires, ce filtre comportant un réseau formé par des fibres de polymères, caractérisé en ce que ces fibres sont revêtues d'une matière qui les durcit, renforce et raffermit et améliore l'aptitude du filtre à libérer les composants, permettant un nettoyage du filtre et sa réutilisation, la matière du revêtement comprenant un polymère et un agent de charge choisi parmi le graphite et les intercalaires du graphite.

2. Filtre absolu de fluides selon la revendication 1, caractérisé en ce que la matière du revêtement comprend une poudre graphituque et l'application du revêtement confère au réseau du filtre une résistivité comprise entre $10^{-4}$ et $10^{-1}$ ohm-cm.

3. Filtre absolu de fluides pour éliminer, de courants de gaz, des composants tels que des particules de matière; des particules et aérosols combinés, des solides sublimés et des produits similaires, ce filtre comprenant un réseau formé par des fibres de polymères, caractérisé en ce que ces fibres sont formées à partir d'un mélange d'un polymère et d'un agent de charge choisi de manière à durcir, renforcer et raffermir les fibres et à améliorer l'aptitude du filtre à libérer les composants permettant un nettoyage du filtre et sa réutilisation, l'agent de charge étant choisi parmi le graphite, les intercalaires du graphite et le noir de carbone électriquement conductible.

4. Filtre absolu de fluides selon la revendication 3, caractérisé en ce que les fibres sont formées à partir d'un mélange de noir de carbone et de polyéthylène.

5. Filtre absolu de fluides selon l'une quelconque des revendications précédentes, caractérisé en ce que l'agent de charge comprend des moyens pour absorber les vapeurs cancérigènes et des vapeurs et/ou particules nocives similaires emportées par les courants de gaz, ou pour altérer la réactivité chimique de ces vapeurs et/ou particules cancérigènes et similaires ou pour modifier leur structure chimique.

6. Filtre absolu de fluides selon la revendication 5, caractérisé en ce que l'agent de charge contient un intercalaire de graphite représentant les moyens absorbants.